# EUROPEAN PATENT APPLICATION

(11) **EP 3 305 481 A1**
(43) Date of publication of application: **11.04.2018**
(21) Application number: 16803536.8
(22) Date of filing: 03.06.2016
(51) Int. Cl.: B25J 18/02, F16C 13/00

(54) **ROBOT ARM MECHANISM**

(30) Priority: 05.06.2015 JP 2015114620
(71) Applicant: Life Robotics Inc., Koto-ku Tokyo 135-0047 (JP)
(72) Inventor: YOON, Woo-Keun, Tokyo 135-0047 (JP)
(74) Representative: Herrero & Asociados, S.L.
(86) International application number: PCT/JP2016/066693
(87) International publication number: WO 2016/195105

(57) **Abstract**

This invention designs durability among components in accordance with maintenance man-hours and maintenance cost. A robot arm mechanism according to the present embodiment includes an arm section (2) capable of changing state between a rigid state and a bent state; a supporting section (30) that supports the arm section (2) in the rigid state; a housing section (11a) that houses the arm section (2) in the bent state; and a conveying section (50) that sends the arm section (2) out forward from the supporting section (11a), draws back the arm section (2) rearward to the supporting section (30), and conveys the arm section (2) between the supporting section (30) and the housing section (11a). The supporting section (30) includes a plurality of rollers for firmly sandwiching the arm section (2) therebetween and supporting the arm section (2) so as to be movable forward and rearward. At least one of a surface hardness and a strength of the plurality of rollers is the same as or lower than a surface hardness and/or a strength of the arm section (2).

## Description

### FIELD

Embodiments described herein relate generally to a robot arm mechanism.

### BACKGROUND

Conventionally, an articulated robot arm mechanism is used in various fields such as fields which relate to industrial robots. For example, the robot arm mechanism is provided with a linear extension and retraction joint. An arm section constituting the linear extension and retraction joint includes, for example, two kinds of connection piece strings in which a plurality of pieces having the same shape are connected to each other in a string shape. By joining the two kinds of connection piece strings together, a rigid state is formed therebetween, whereby an arm section as a columnar body having a certain rigidity is constructed. When the linear extension and retraction joint is driven, the arm section in the form of a columnar body is sent out from an ejection section. The ejection section is equipped with a plurality of rollers for firmly sandwiching the arm section therebetween and supporting the arm section so as to be movable in the forward and rearward directions. It is considered that the components at which damage is most liable to occur in the arm section and the ejection section are the rollers and connection pieces because a load is applied thereto from the entire arm section and a hand or the like that is provided in the arm section, as well as a work or the like that is gripped with the hand.

An object of the present invention is to design durability between components that in accordance with the maintenance man-hours and the cost thereof.

A robot arm mechanism according to the present embodiment includes: an arm section capable of changing state between a rigid state and a bent state; a supporting section that supports the arm section in the rigid state; a housing section that houses the arm section in the bent state; and a conveying section that sends the arm section out forward from the supporting section, draws back the arm section rearward to the supporting section, and conveys the arm section between the supporting section and the housing section; wherein: the supporting section includes a plurality of rollers for firmly sandwiching the arm section therebetween and supporting the arm section so as to be movable forward and rearward; and at least one of a surface hardness and a strength of the plurality of rollers is identical to or lower than a surface hardness and/or a strength of the arm section.

### BRIEF DESCRIPTION OF THE VIEWS OF THE DRAWINGS

FIG. 1 is an external perspective view of a robot arm mechanism according to the present embodiment;
FIG. 2 is a view of the internal structure of the robot arm mechanism illustrated in FIG. 1 as seen from the cross-sectional direction;
FIG. 3 is a view illustrating the configuration of the robot arm mechanism in FIG. 1 by representation with graphic symbols;
FIG. 4 is a perspective view of an ejection section illustrated in FIG. 2;
FIG. 5 is a cross-sectional view taken along the direction of A-A in FIG. 4;
FIGS. 6A to 6D are perspective views taken along the directions of arrows A-D in FIG. 5;
FIG. 7 is a perspective view of a roller illustrated in FIGS. 6A to 6D;
FIG. 8 is a longitudinal sectional view of the roller illustrated in FIG. 7;
FIG. 9 is a longitudinal sectional view illustrating another structure of the roller illustrated in FIG. 7;
FIG. 10 is a longitudinal sectional view illustrating a further other structure of the roller illustrated in FIG. 7;
FIG. 11 is a perspective view illustrating another structure of the roller illustrated in FIGS. 6A to 6D; and
FIG. 12 is a longitudinal sectional view of the roller illustrated in FIG. 11.

### DETAILED DESCRIPTION

Hereinafter, a robot arm mechanism according to the present embodiment is described with reference to the accompanying drawings. In the following description, the same reference numerals denote components that have substantially identical functions and configurations, and a repeated description of such components is made only if necessary.

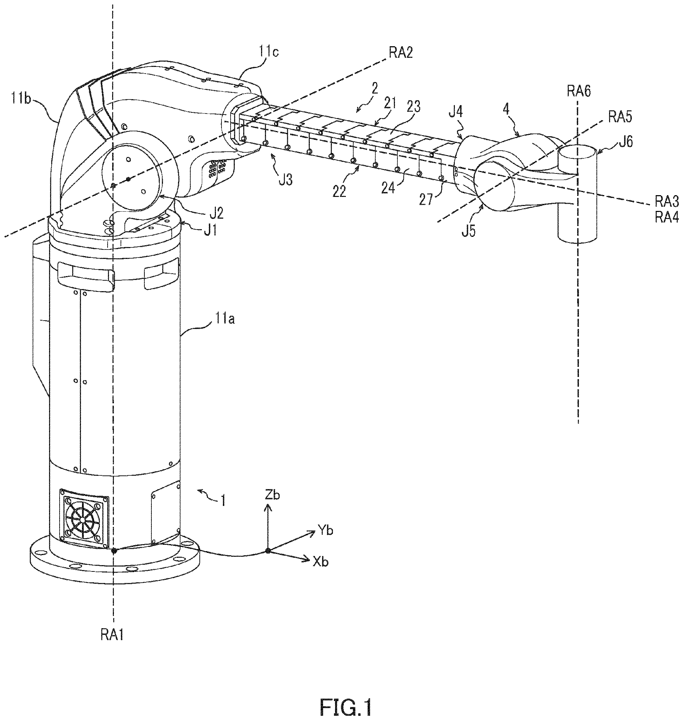

FIG. 1 is an external perspective view of the robot arm mechanism according to the present embodiment. The robot arm mechanism includes a substantially cylindrical base 10, an arm section 2 that is connected to the base 10, and a wrist section 4 that is attached to the tip of the arm section 2. An unshown adapter is provided at the wrist section 4. For example, the adapter is provided at a rotating section on a sixth rotation axis RA6 that is described later. A robot hand configured according to the use is attached to the adapter provided at the wrist section 4.

The robot arm mechanism includes a plurality of joints, in this example, six joints, J1, J2, J3, J4, J5 and J6. The plurality of joints J1, J2, J3, J4, J5 and J6 are arranged in the foregoing order from the base 10. Generally, a first, a second and a third joint J1, J2 and J3 are called "root three axes", and a fourth, a fifth and a sixth joint J4, J5 and J6 are called "wrist three axes" that change the posture of the robot hand. The wrist section 4 includes the fourth, fifth and sixth joints J4, J5 and J6. At least one of the joints J1, J2 and J3 constituting the root three axes is a linear extension and retraction joint. Herein, the third joint J3 is configured as a linear extension and retraction joint, in particular, as a joint with a relatively long extension and retraction distance. The arm section 2 represents an extension and retraction portion of the linear extension and retraction joint J3 (third joint J3).

The first joint J1 is a torsion joint that rotates on a first rotation axis RA1 and which is supported, for example, perpendicularly to a base surface. The second joint J2 is a bending joint that rotates on a second rotation axis RA2 that is arranged perpendicular to the first rotation axis RA1. The third joint J3 is a joint at which the arm section 2 linearly extends or retracts along a third axis (movement axis) RA3 that is arranged perpendicular to the second rotation axis RA2.

The fourth joint J4 is a torsion joint that rotates on a fourth rotation axis RA4. The fourth rotation axis RA4 substantially matches the third movement axis RA3 when a seventh joint J7 that is described later is not rotated, that is, when the entire arm section 2 is a rectilinear shape. The fifth joint J5 is a bending joint that rotates on a fifth rotation axis RA5 that is orthogonal to the fourth rotation axis RA4. The sixth joint J6 is a bending joint that rotates on the sixth rotation axis RA6 that is arranged orthogonal to the fourth rotation axis RA4 and perpendicular to the fifth rotation axis RA5.

An arm support body (first support body) 11a forming the base 10 has a cylindrical hollow structure formed around the first rotation axis RA1 of the first joint J1. The first joint J1 is attached to a fixed base (not shown). When the first joint J1 rotates, the arm section 2 turns left and right together with the axial rotation of the first support body 11a. The first support body 11a may be fixed to a supporting surface. In such case, the arm section 2 is provided with a structure that turns independently of the first support body 11a. A second support body 11b is connected to an upper part of the first support body 11a.

The second support body 11b has a hollow structure continuous to the first support body 11a. One end of the second support body 11b is attached to a rotating section of the first joint J1. The other end of the second support body 11b is opened, and a third support body 11c is set rotatably on the rotation axis RA2 of the second joint J2. The third support body 11c has a hollow structure made from a scaly outer covering that communicates with the first support body 11a and the second support body 11b. In accordance with the bending rotation of the second joint J2, a rear part of the third support body 11c is accommodated in or sent out from the second support body 11b. The rear part of the arm section 2 constituting the linear extension and retraction joint J3 (third joint J3) of the robot arm mechanism is housed inside the continuous hollow structure of the first support body 11a and the second support body 11b by retraction thereof.

The third support body 11c is set rotatably, at the lower part of its rear end, on the second rotation axis RA2 with respect to a lower part of an open end of the second support body 11b. In this way, the second joint J2 serving as a bending joint that rotates on the second rotation axis RA2 is formed. When the second joint J2 rotates, the arm section 2 rotates vertically, i.e., rotates upward and downward, on the second rotation axis RA2 of the arm section 2.

The fourth joint J4 is a torsion joint having the fourth rotation axis RA4 which typically abuts an arm center axis along the extension and retraction direction of the arm section 2, that is, the third movement axis RA3 of the third joint J3. When the fourth joint J4 rotates, the wrist section 4 and the robot hand attached to the wrist section 4 rotate on the fourth rotation axis RA4. The fifth joint J5 is a bending joint having the fifth rotation axis RA5 that is orthogonal to the fourth rotation axis RA4 of the fourth joint J4. When the fifth joint J5 rotates, the wrist section 4 pivots up and down from the fifth joint J5 to its tip together with the robot hand (in the vertical direction around the fifth rotation axis RA5). The sixth joint J6 is a bending joint having the sixth rotation axis RA6 that is orthogonal to the fourth rotation axis RA4 of the fourth joint J4 and is perpendicular to the fifth rotation axis RA5 of the fifth joint J5. When the sixth joint J6 rotates, the robot hand turns left and right.

As described above, the robot hand attached to the adapter of the wrist section 4 is moved to a given position by the first, second and third joints J1, J2 and J3, and is disposed in a given posture by the fourth, fifth and sixth joints J4, J5 and J6. In particular, the length of the extension and retraction distance of the arm section 2 of the third joint J3 makes it possible to cause the robot hand to reach objects over a wide range from a position close to the base 10 to a position far from the base 10. The third joint J3 is characterized by linear extension and retraction operations realized by a linear extension and retraction mechanism constituting the third joint J3, and by the length of the extension and retraction distance thereof.

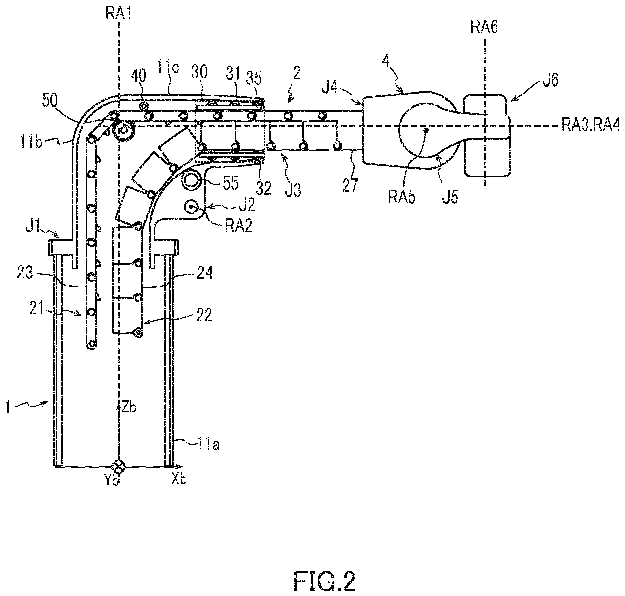

FIG. 2 is a perspective view illustrating the internal structure of the robot arm mechanism in FIG. 1. The linear extension and retraction mechanism includes the arm section 2 and an ejection section 30. The arm section 2 has a first connection piece string 21 and a second connection piece string 22. The first connection piece string 21 includes a plurality of first connection pieces 23. The first connection pieces 23 are formed in a substantially flat plate shape. The first connection pieces 23 which are arranged in front and behind each other are connected to each other in a string shape in a bendable manner by pins at their edge parts. The first connection piece string 21 can bend inward and outward freely.

The second connection piece string 22 includes a plurality of second connection pieces 24. The respective second connection pieces 24 are formed as a short groove-like body having an inverted U-shape in transverse section. The second connection pieces 24 which are arranged in front and behind each other are connected to each other in a string shape in a bendable manner by pins at their bottom edge parts. The second connection piece string 22 can bend inward. Because the cross section of each of the second connection pieces 24 is an inverted U-shape, the second connection piece string 22 does not bend outward since side plates of adjacent second connection pieces 24 collide together. Note that, a face that faces the second rotation axis RA2 of the first and second connection pieces 23 and 24 is referred to as an inner face, and a face on the opposite side to the inner face is referred to as an outer face. The foremost first connection piece 23 in the first connection piece string 21, and the foremost second connection piece 24 in the second connection piece string 22 are connected by a head piece 27. For example, the head piece 27 has a shape that combines the second connection piece 24 and the first connection piece 23.

The ejection section 30 includes a plurality of rollers. The plurality of rollers support from the top, bottom, left and right sides a columnar body that is formed by joining together of the first and second connection piece strings 21 and 22 that are guided into the ejection section 30. The detailed description of the ejection section 30 is described later. At the rear of the ejection section 30, a guide roller 40 and a drive gear 50 are provided so as to face each other with the first connection piece string 21 sandwiched therebetween. The drive gear 50 is connected to a stepping motor 55 through an unshown decelerator. A linear gear is formed along the connecting direction on the inner face of the first connection piece 23. When a plurality of the first connection pieces 23 are aligned in a rectilinear shape, the linear gears of the first connection pieces 23 connect in a rectilinear shape to thereby form a long linear gear. The drive gear 50 is meshed with the linear gear having the rectilinear shape. The linear gear that is connected in a rectilinear shape constitutes a rack-and-pinion mechanism together with the drive gear 50.

When the arm is extended, a motor 55 drives and the drive gear 50 rotates in the forward direction so that the first connection piece string 21 is placed in a posture in which the first connection piece string 21 is parallel to the arm center axis and is guided to the ejection section 30 by the guide roller 40. Accompanying movement of the first connection piece string 21, the second connection piece string 22 is guided to the ejection section 30 by an unshown guide rail arranged at the rear of the ejection section 30. The ejection section 30 joins the first and second connection piece strings 21 and 22 together by pressing the first and second connection piece strings 21 and 22 together, and supports a columnar body formed as a result of the first and second connection piece strings 21 and 22 being joined together, in the upward, downward, left and right directions. The joined state of the first and second connection piece strings 21 and 22 is maintained by means of the columnar body being firmly held by the ejection section 30. When the joined state between the first and second connection piece strings 21 and 22 is maintained, bending of the first and second connection piece strings 21 and 22 is restricted in a reciprocal manner by the first and second connection piece strings 21 and 22. Thus, the first and second connection piece strings 21 and 22 constitute a columnar body that has a certain rigidity. The term "columnar body" refers to a columnar rod body that is formed by the first connection piece string 21 being joined to the second connection piece string 22. In the columnar body, the second connection pieces 24 are, together with the first connection pieces 23, constituted in a tubular body having various cross-sectional shapes overall. The tubular body is defined as a shape in which the top, bottom, left and right sides are enclosed by a top plate, a bottom plate and two side plates, and a front end section and rear end section are open. The columnar body formed by joining of the first and second connection piece strings 21 and 22 is linearly sent out along the third movement axis RA3 starting with the head piece 27 in the outward direction from an opening of the third support body 11c.

When the arm is retracted, the motor 55 drives and the drive gear 50 is rotated in the back direction, whereby the first connection piece string 21 that is engaged with the drive gear 50 is drawn back into the first support body 11a. Accompanying the movement of the first connection piece string, the columnar body is drawn back into the third support body 11c. The columnar body that has been drawn back separates at the rear of the ejection section 30. For example, the first connection piece string 21 constituting one part of the columnar body is sandwiched between the guide roller 40 and the drive gear 50, and the second connection piece string 22 constituting one part of the columnar body is pulled downward by gravitational force, and as a result the second connection piece string 22 and the first connection piece string 21 break away from each other. The first and second connection piece strings 21 and 22 that broke away from each other revert to their respective bendable states. When housing the first and second connection piece strings 21 and 22, the second connection piece string 22 is bent and conveyed to the inner side into a housing section within the first support body 11a (base 10) from the ejection section 30, and the first connection piece string 21 is also bent and conveyed in the same direction (inward) as the second connection piece string 22. The first connection piece string 21 and the second connection piece string 22 are housed in a substantially parallel state.

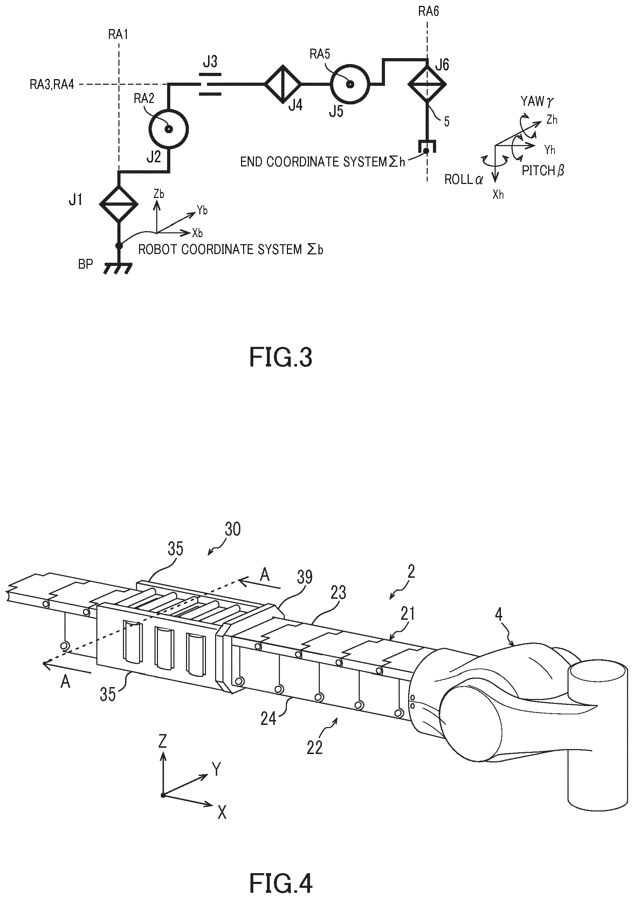

FIG. 3 is a view illustrating the robot arm mechanism in FIG. 1 by representation with graphic symbols. In the robot arm mechanism, three positional degrees of freedom are realized by the first joint J1, the second joint J2 and the third joint J3 constituting the root three axes. Further, three postural degrees of freedom are realized by the fourth joint J4, the fifth joint J5 and the sixth joint J6 constituting the wrist three axes.

A robot coordinate system ∑b is a coordinate system that takes a given position on the first rotation axis RA1 of the first joint J1 as the origin. In the robot coordinate system ∑b, three orthogonal axes (Xb, Yb, Zb) are defined. The Zb axis is an axis that is parallel to the first rotation axis RA1. The Xb axis and the Yb axis are orthogonal to each other, and are orthogonal to the Zb axis. An end coordinate system ∑h is a coordinate system that takes a given position (end reference point) of the robot hand 5 that is attached to the wrist section 4 as the origin. For example, in a case where the robot hand 5 is a two-fingered hand, the position of the end reference point (hereunder, referred to simply as "end") is defined as the center position between the two fingers. In the end coordinate system ∑h, three orthogonal axes (Xh, Yh, Zh) are defined. The Zh axis is an axis that is parallel to the sixth rotation axis RA6. The Xh axis and the Yh axis are orthogonal to each other, and are orthogonal to the Zh axis. For example, the Xh axis is an axis that is parallel to the longitudinal direction of the robot hand 5. The end posture is given as a rotation angle (rotation angle around the Xh axis (yaw angle)) α, a rotation angle (pitch angle) β around the Yh axis, and a rotation angle (roll angle) γ around the Zh axis) that rotate around the respective orthogonal three axes with respect to the robot coordinate system ∑b of the end coordinate system ∑h.

The first joint J1 is arranged between the first support body 11a and the second support body 11b, and is configured as a torsion joint that rotates on the rotation axis RA1. The rotation axis RA1 is arranged perpendicular to a base plane BP of a base mount on which a fixed section of the first joint J1 is disposed.

The second joint J2 is configured as a bending joint that rotates on the rotation axis RA2. The rotation axis RA2 of the second joint J2 is provided parallel to the Xb axis on a spatial coordinate system. The rotation axis RA2 of the second joint J2 is provided in a perpendicular direction relative to the rotation axis RA1 of the first joint J1. In addition, relative to the first joint J1, the second joint J2 is offset in two directions, namely, the direction of the first rotation axis RA1 (Zb-axis direction), and the Yb-axis direction that is perpendicular to the first rotation axis RA1. The second support body 11b is attached to the first support body 11a in a manner so that the second joint J2 is offset in the aforementioned two directions relative to the first joint J1. A virtual arm rod portion (link portion) connecting the first joint J1 to the second joint J2 has a crank shape in which two hook-shaped bodies that each have a tip that is bent at a right angle are combined. The virtual arm rod portion is constituted by the first and second support bodies 11a and 11b which have a hollow structure.

The third joint J3 is configured as a linear extension and retraction joint that rotates on the movement axis RA3. The movement axis RA3 of the third joint J3 is provided in a perpendicular direction relative to the rotation axis RA2 of the second joint J2. When the arm section 2 is in a horizontal alignment pose in which the rotation angle of the second joint J2 is zero degrees, that is, the upward/downward rotation angle of the arm section 2 is zero degrees, the movement axis RA3 of the third joint J3 is also provided in a perpendicular direction to the rotation axis RA1 of the first joint J1 together with the rotation axis RA2 of the second joint J2. On the spatial coordinate system, the movement axis RA3 of the third joint J3 is provided parallel to the Yb axis that is perpendicular to the Xb axis and Zb axis. In addition, relative to the second joint J2, the third joint J3 is offset in two directions, namely, the direction of the rotation axis RA2 thereof (Yb-axis direction), and the direction of the Zb axis that is orthogonal to the movement axis RA3. The third support body 11c is attached to the second support body 11b in a manner so that the third joint J3 is offset in the aforementioned two directions relative to the second joint J2. A virtual arm rod portion (link portion) connecting the second joint J2 to the third joint J3 has a hook-shaped body in which the tip is bent at a right angle. The virtual arm rod portion is constituted by the second and third support bodies 11b and 11c.

The fourth joint J4 is configured as a torsion joint that rotates on the rotation axis RA4. The rotation axis RA4 of the fourth joint J4 is arranged so as to substantially match the movement axis RA3 of the third joint J3.

The fifth joint J5 is configured as a bending joint that rotates on the rotation axis RA5. The rotation axis RA5 of the fifth joint J5 is arranged so as to be substantially orthogonal to the movement axis RA3 of the third joint J3 and the rotation axis RA4 of the fourth joint J4.

The sixth joint J6 is configured as a torsion joint that rotates on the rotation axis RA6. The rotation axis RA6 of the sixth joint J6 is arranged so as to be substantially orthogonal to the rotation axis RA4 of the fourth joint J4 and the rotation axis RA5 of the fifth joint J5. The sixth joint J6 is provided for turning the robot hand 5 as an end effector to the left and right. The sixth joint J6 may be configured as a bending joint in which the rotation axis RA6 thereof is substantially orthogonal to the rotation axis RA4 of the fourth joint J4 and the rotation axis RA5 of the fifth joint J5.

By replacing one bending joint among the root three axes of the plurality of joints J1 to J6 with a linear extension and retraction joint, causing the second joint J2 to be offset in two directions relative to the first joint J1, and causing the third joint J3 to be offset in two directions relative to the second joint J2 in this way, the robot arm mechanism according to the present embodiment structurally eliminates a singular point posture.

### (Structure of Ejection Section 30)

The ejection section 30 is equipped with a structure for supporting the columnar body that is formed by joining together the first and second connection piece strings 21 and 22. Hereunder, a typical structure of the ejection section 30 is described referring to FIG. 4, FIG. 5 and FIGS. 6A to 6D. FIG. 4 is a perspective view illustrating the ejection section 30 shown in FIG. 2. As illustrated in FIG. 4, the ejection section 30 is constituted by a frame 35 that has a substantially rectangular cylinder shape. The ejection section 30 is disposed in the rearward vicinity of an ejection opening 39 at the tip of the third support body 11c. Hereunder, the center axis of the ejection section 30 having the substantially rectangular cylinder shape is referred to as "ejection center axis". The ejection center axis is coincident with an arm center axis (third movement axis RA3). The arm center axis is the center axis of the columnar body that is being supported by the ejection section 30.

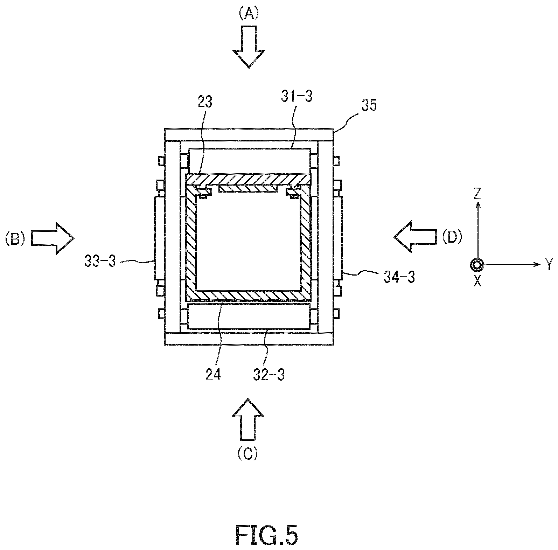

FIG. 5 is a cross-sectional view along a line A-A in FIG. 4. As illustrated in FIG. 5, a plurality of rollers for firmly and movably supporting, from the four directions of upward, downward, left and right, a columnar body that is formed by joining together of the first and second connection piece strings 21 and 22 are provided in the frame 35. To enable replacement of only the damaged roller in a case where a roller is damaged, the frame 35 is provided with a structure such that the plurality of rollers can be detachably mounted thereto individually, that is, a structure in which the shafts of the rollers are individually fixed to the frame. Hereunder, for convenience in the description, a roller supporting the arm section 2 from a surface side of the first connection pieces 21 is referred to as "upper roller", a roller supporting the arm section 2 from a bottom face side of the second connection pieces 21 is referred to as "lower roller", a roller supporting the arm section 2 from the left side is referred to as "left-side roller", and a roller supporting the arm section 2 from the right side is referred to as "right-side roller".

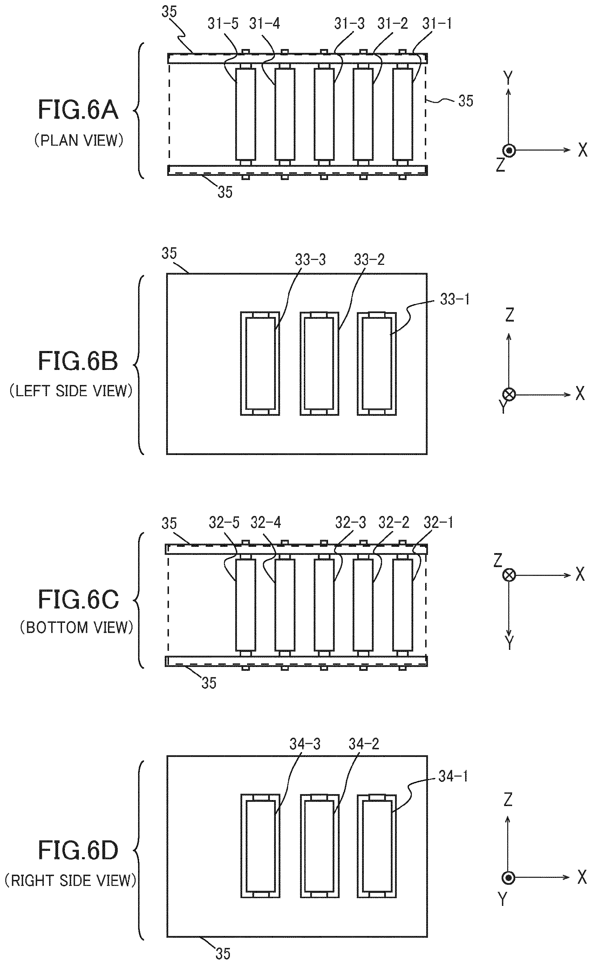

FIG. 6A is a perspective view (plan view) from the direction of arrow A of the ejection section 30 shown in FIG. 5. FIG. 6B is a perspective view (left side view) from the direction of arrow B of the ejection section 30 shown in FIG. 5. FIG. 6C is a perspective view (bottom view) from the direction of arrow C of the ejection section 30 shown in FIG. 5. FIG. 6D is a perspective view (right side view) from the direction of arrow D of the ejection section 30 shown in FIG. 5. upper rollers 31-1, 31-2, 31-3, 31-4 and 31-5 are arranged in that order from the front side at regular intervals along the ejection center axis at the upper part of the frame 35. The five upper rollers 31-1 to 31-5 are arranged in a direction in which the center axes of rotation thereof are parallel to each other and which is a direction that is perpendicular to the ejection center axis. Typically, the distance (interval) between the center lines of rotation at which the plurality of upper rollers 31-1 to 31-5 are arranged is set shorter than the length of the first connection pieces 23.

Lower rollers 32-1, 32-2, 32-3, 32-4 and 32-5 of the same number as the upper rollers 31-1 to 31-5 are arranged in that order from the front side at regular intervals along the ejection center axis at the lower part of the frame 35. The five lower rollers 32-1 to 32-5 are arranged in a direction in which the center axes of rotation of the rollers are parallel to each other and which is a direction that is perpendicular to the ejection center axis. Typically, the distance (interval) between the center lines of rotation at which the plurality of lower rollers 32-1 to 32-5 are arranged is equal to the distance (interval) between the center lines of rotation at which the plurality of upper rollers 31-1 to 31-5 are arranged, and is set shorter than the length of the second connection pieces 24. The front lower roller 32-1 is disposed at the same position along the ejection center axis as the front upper roller 31-1. The plurality of lower rollers 32-1 to 32-5 face the plurality of upper rollers 31-1 to 31-5, respectively, across the columnar body.

Left-side rollers 33-1, 33-2 and 33-3 are arranged in that order from the front at regular intervals along the ejection center axis at the left-side portion of the frame 35. The number of the left-side rollers 33-1, 33-2 and 33-3 is less than the number of upper rollers 31-1 to 31-5 and the number of lower rollers 32-1 to 32-5, respectively. The three left-side rollers 33-1 to 33-3 are arranged in a direction in which the center axes of rotation of the rollers are parallel to each other and which is a direction that is perpendicular to the ejection center axis. The left-side rollers 33-1, 33-2 and 33-3 are disposed within the range from the front upper roller 31-1 to the rearmost upper roller 31-5. The arrangement interval of the plurality of left-side rollers 33-1 to 33-3 is set to 1/4 of the interval between the front upper roller 31-1 and the rearmost upper roller 31-5.

Right-side rollers 34-1, 34-2 and 34-3 are arranged in that order from the front at regular intervals along the ejection center axis at the right-side portion of the frame 35. The number of the right-side rollers 34-1, 34-2 and 34-3 is the same as the number of the left-side rollers 33-1, 33-2 and 33-3. The three right-side rollers 34-1 to 34-3 are arranged in a direction in which the center axes of rotation of the rollers are parallel to each other and which is a direction that is perpendicular to the ejection center axis. The right-side rollers 34-1, 34-2 and 34-3 are disposed within the range from the front upper roller 31-1 to the rearmost upper roller 31-5. The plurality of right-side rollers 34-1 to 34-3 are provided at an arrangement interval that is equal to the arrangement interval of the plurality of left-side rollers 33-1 to 33-3. The front right-side roller 34-1 is disposed at the same position along the ejection center axis as the front left-side roller 33-1. The plurality of right-side rollers 34-1 to 34-3 face the plurality of left-side rollers 33-1 to 33-3, respectively, across the columnar body.

The distance between the upper rollers 31-1 to 31-5 and the lower rollers 32-1 to 32-5 is set so as to be slightly less than the thickness of the columnar body. Specifically, in the frame 35, the attachment positions of the plurality of upper rollers 31-1 to 31-5 and the attachment positions of the plurality of lower rollers 32-1 to 32-5 are adjusted so that the thickness of the ejection section 30 is slightly less than the thickness of the columnar body. As a result, the plurality of upper rollers 31-1 to 31-5 and the plurality of lower rollers 32-1 to 32-5 firmly support the columnar body in a state in which a preload is applied between the aforementioned rollers and the columnar body.

The distance between the left-side rollers 33-1 to 33-3 and the right-side rollers 34-1 to 34-3 is set so as to be slightly narrower than the width of the columnar body. Specifically, in the frame 35, the attachment positions of the plurality of left-side rollers 33-1 to 33-3 and the attachment positions of the plurality of right-side rollers 34-1 to 34-3 are adjusted so that the width of the ejection section 30 is slightly narrower than the width of the columnar body. As a result, the plurality of left-side rollers 33-1 to 33-3 and the plurality of right-side rollers 34-1 to 34-3 firmly support the columnar body in a state in which a preload is applied between the aforementioned rollers and the columnar body. By adjusting the positions of the plurality of rollers so that an appropriate preload is applied between the ejection section 30 and the columnar body, backlash between the rollers and the columnar body when extending or retracting the arm is reduced, and thus the rigidity of the ejection section 30 can be increased.

### (Structure of Rollers)

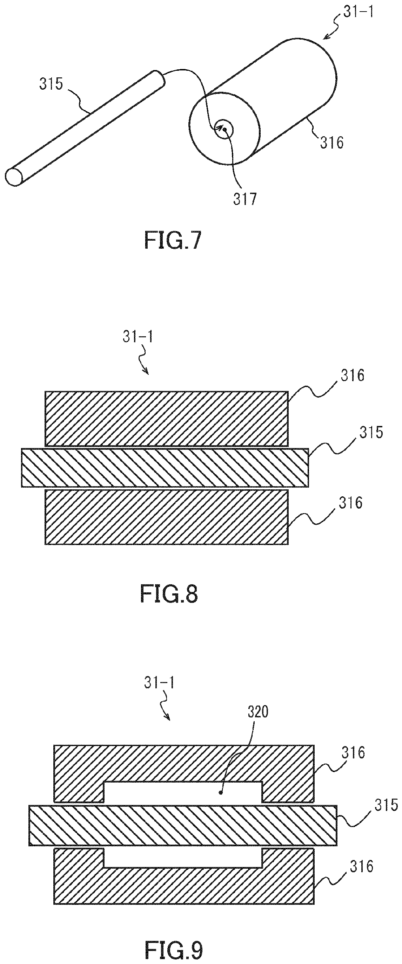

The structure of the rollers will now be described referring to FIG. 7 and FIG. 8. Here, the structure of the rollers will be described by taking the front upper roller 31-1 as an example. The other upper rollers 31-2 to 31-5 and the lower rollers 32-1 to 32-5 are made of the same material and in the same shape and size as the front upper roller 31-1. Although the material and shape of the left-side rollers 33-1 to 33-3 and the right-side rollers 34-1 to 34-3 are the same as the material and shape of the front upper roller 31-1, the left-side rollers 33-1 to 33-3 and the right-side rollers 34-1 to 34-3 are made with a larger diameter than the front upper roller 31-1. The right-side rollers 34-1 to 34-3 and the left-side rollers 33-1 to 33-3 are made of the same material and in the same shape and size as each other.

FIG. 7 is a perspective view of the roller shown in FIGS. 6A to 6D. FIG. 8 is a longitudinal sectional view of the roller shown in FIG. 7. As illustrated in FIG. 7, the upper roller 31-1 is composed of a roller shaft 315 and a roller main body 316. The roller shaft 315 is made of metal and is formed in a circular cylinder shape, and is detachably attached to the frame 35 by means of a screw, for example. The roller shaft 315 is inserted into a shaft hole 317 of the roller main body 316, and axially supports the roller main body 316 directly. Thereby, the roller main body 316 can rotate around the roller shaft 315 as a rotary shaft. As illustrated in FIG. 8, the shaft hole 317 that has a cylindrical shape and whose diameter is somewhat shorter than the diameter of the roller shaft 315 is formed in the roller main body 316. Therefore, a frictional force is generated on the roller shaft 315 by contact with the inner wall of the shaft hole 317. If the frictional force is large, in some cases the roller main body 316 may not be able to rotate smoothly around the roller shaft 315. Therefore, the inner wall of the shaft hole 317 may be subjected to processing for reducing the frictional force between the roller shaft 315 and the inner wall of the shaft hole 317.

FIG. 9 is a longitudinal sectional view illustrating another structure of the roller shown in FIG. 7. As illustrated in FIG. 9, in order to reduce a frictional force between the roller shaft 315 and the shaft hole 317, a groove 320 may be formed in the vicinity of the center of the inner wall of the shaft hole 317 of the roller main body 316 to thereby decrease the contact area between the roller shaft 315 and the shaft hole 317. The width of the groove 320 is adjusted in accordance with the frictional force required between the roller shaft 315 and the inner wall of the shaft hole 317. By providing the groove with a wide width, the contact area between the roller shaft 315 and the shaft hole 317 can be decreased more, and the frictional force between the roller shaft 315 and the inner wall of the shaft hole 317 can be further reduced. As illustrated in FIG. 9, the groove 320 is formed in the center part of the shaft hole 317. However, the groove 320 may be formed at a position that is offset in the axial direction of the shaft hole 317 from the center part of the shaft hole 317, or the groove 320 may be formed at a plurality of positions along the axial direction of the shaft hole 317.

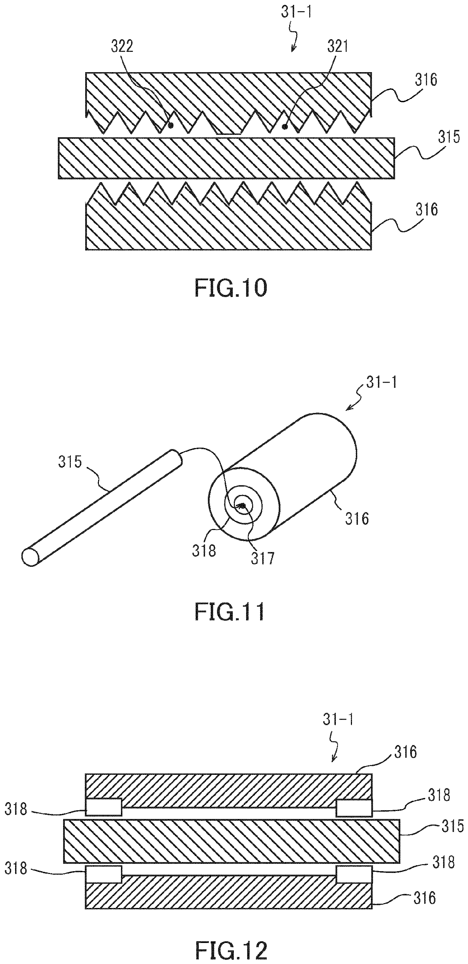

FIG. 10 is a longitudinal sectional view illustrating a further other structure of the roller shown in FIG. 7. Thread grooves 321 and 322 may be formed in the inner wall of the shaft hole 317 of the roller main body 316. The thread groove 321 is cut in the shaft hole 317 from the front side thereof, and the thread groove 322 is cut in the shaft hole 317 from the rear side thereof. The thread groove 322 is cut with inverse threading relative to the threading of the thread groove 321. The thread groove 322 is formed with the same thread pitch and number of grooves as the thread groove 321. The space between the thread grooves 321 and 322 is adjusted in accordance with the frictional force that is required between the roller shaft 315 and the inner wall of the shaft hole 317. By making the width of the thread grooves 321 and 322 wide, the contact area between the roller shaft 315 and the inner wall of the shaft hole 317 can be decreased, and the frictional force between the roller shaft 315 and the inner wall of the shaft hole 317 can be reduced. Because the thread groove 322 is cut with inverse threading relative to the threading of the thread groove 321 and is formed with the same thread pitch and number of grooves as the thread groove 321, when the roller main body 316 rotates, the roller main body 316 can stay at the same position without moving to one end side of the roller shaft 315.

In the rollers described in FIG. 7 to FIG. 10, the roller main body 316 is axially supported directly by the roller shaft 315. However, the roller structure is not limited thereto, and other roller structures will now be described referring to FIG. 11 and FIG. 12. In this case also, the front upper roller 31-1 will be described as an example. The other upper rollers 31-2 to 31-5 and the lower rollers 32-1 to 32-5 are made of the same material and in the same shape and size as the front upper roller 31-1. Although the material and shape of the left-side rollers 33-1 to 33-3 and the right-side rollers 34-1 to 34-3 are the same as the material and shape of the upper rollers 31-1 to 31-5 and the lower rollers 32-1 to 32-5, the left-side rollers 33-1 to 33-3 and the right-side rollers 34-1 to 34-3 are made with a larger diameter than the upper roller 31-1. The right-side rollers 34-1 to 34-3 and the left-side rollers 33-1 to 33-3 are made with the same material and in the same shape and size as each other.

FIG. 11 is a perspective view illustrating another structure of the roller illustrated in FIGS. 6A to 6D. FIG. 12 is a longitudinal sectional view of the roller illustrated in FIG. 11. As illustrated in FIG. 11, the upper roller 31-1 is composed of the roller shaft 315, the roller main body 316 and bearings 318. The roller shaft 315 is inserted into the shaft hole 317 of the roller main body 316, and is connected to the roller main body 316 through the bearings 318. Thereby, the roller main body 316 can rotate around the roller shaft 315 as a rotary shaft.

Hereunder, combinations of the material (roller material) forming the roller and the material (piece material) of the first and second connection pieces 23 and 24 (piece material) constituting the arm section 2 are described. At least one of the surface hardness and strength of the roller is the same as or lower than the surface hardness and strength of the first and second connection pieces 23 and 24 constituting the arm section 2. As long as this condition is satisfied, damage such as surface abrasions, ruptures or cracks arise at an earlier stage in the roller than in the first and second connection pieces 23 and 24. The reason is that although the plurality of first and second connection pieces 23 and 24 pass through the rollers in sequential order accompanying forward or rearward movement of the arm section 2, a state in which the rollers press against the arm section 2 continues irrespective of forward or rearward movement of the arm section 2.

To satisfy the aforementioned condition, the first and second connection pieces 23 and 24 constituting the arm section 2 are made of metal, while the plurality of rollers are made of the same metal as the first and second connection pieces 23 and 24 or are made of resin or hard rubber. Typically aluminum is used as the metal. When the first and second connection pieces 23 and 24 are made of metal, preferably the surface hardness is raised by a surface treatment. For example, in a case where the first and second connection pieces 23 and 24 are made of aluminum, a hard anodized aluminum treatment is performed as the surface treatment. A self-lubricating resin is preferable as the resin. Polyacetal (POM), polyamide (PA), polytetrafluoroethylene (PTFE; fluorocarbon resin) or another resin may be adopted as the self-lubricating resin. Among these, it can be said that polyacetal (POM) is the best from the viewpoint of self-lubricity, mechanical properties and formability. For example, chloroprene rubber, nitrile rubber or ebonite is adopted as the hard rubber.

Further, to satisfy the aforementioned condition, the first and second connection pieces 23 and 24 constituting the arm section 2 may be made of resin. In this case, the plurality of rollers are made of the same resin as the first and second connection pieces 23 and 24 or are made of hard rubber.

Preferably, the plurality of rollers are made of self-lubricating resin, and in this case the arm section is made of metal or is made of resin. In a case where the arm section is made of resin, preferably the arm section is made of self-lubricating resin.

By at least one of the surface hardness and strength of the rollers being set so as to be lower than the corresponding at least one of the surface hardness and strength of the first and second connection pieces 23 and 24 (the arm section 2) in this way, damage to the rollers occurs at an earlier stage than to the first and second connection pieces 23 and 24. The unit cost of the rollers is lower than the unit cost of the first and second connection pieces 23 and 24. The replacement work man-hours required to replace the rollers is less than the replacement work man-hours required to replace the first and second connection pieces 23 and 24. Therefore, the maintenance properties can be enhanced.

Typically, the first and second connection pieces 23 and 24 (the arm section 2) are all composed of the same material, and the plurality of rollers are all composed of the same material. Most preferably, the plurality of rollers are formed of resin having self-lubricity with good sliding properties, and the first and second connection pieces 23 and 24 are formed of metal, which is typically aluminum that provides both hardness and formability in a compatible manner.

Various other combinations are also conceivable. The rollers and the first and second connection pieces 23 and 24 may be formed of aluminum, with only the first and second connection pieces 23 and 24 being subjected to a surface treatment, for example, a hard anodized aluminum treatment, for enhancing the surface hardness. Further, the rollers and the first and second connection pieces 23 and 24 may each be made of resin, with the first and second connection pieces 23 and 24 being formed of a resin that has a higher degree of hardness than the resin used to form the rollers.

Although in the foregoing it is described that all of the plurality of rollers are formed of the same roller material, as long as at least one of the surface hardness and strength of the rollers is lower than the corresponding at least one of the surface hardness and strength of the first and second connection pieces 23 and 24, multiple kinds of rollers in which at least one of the surface hardness and strength are different to each other may be mixed in the plurality of rollers. For example, the first and second connection pieces 23 and 24 may be formed of aluminum that underwent a hard anodized aluminum treatment, and rollers made of aluminum and rollers made of resin may be mixed in the plurality of rollers. For example, among the plurality of rollers, the upper roller 31-5 that is disposed at the upper rearmost position of the columnar body and the lower roller 32-1 that is disposed at lower front position of the columnar body are formed of a roller material with a higher surface hardness than the other rollers. The load torque produced by the self-weight of the arm section 2 that is applied to the upper roller 31-5 and the lower roller 32-1 is greater than the load torque produced by the self-weight of the arm section 2 that is applied to the other rollers. Therefore, by forming the upper roller 31-5 and the lower roller 32-1 with a roller material having a higher surface hardness than the roller material of the other rollers, the rigidity of the ejection section 30 can be increased.

According to the robot arm mechanism described above, at least one of the surface hardness and strength of the plurality of rollers constituting the ejection section 30 is lower than the corresponding at least one of the surface hardness and strength of the first and second connection pieces 23 and 24. Therefore, the rollers are damaged at an earlier stage than the arm section 2 even in a case where an unexpected load is applied from the entire arm section 2 onto the plurality of rollers due to deterioration over time, a load produced by the self-weight of the arm section 2, or a malfunction in an extension or retraction operation of the arm section 2 that is performed by the third joint (linear extension and retraction joint) J3 or the like. If the first and second connection pieces 23 and 24 are damaged, there is a possibility that the arm section 2 will fall down from the ejection section 30. On the other hand, if a roller is damaged, because the arm section 2 can be supported by other rollers that are not damaged, the risk of the arm section 2 falling down from the ejection section 30 can be reduced in comparison to a case where the first and second connection pieces 23 and 24 are damaged. Further, among the plurality of rollers, the load produced by the self-weight of the arm section 2 that is applied to the upper roller 31-5 that is disposed at the upper rearmost position of the columnar body and the lower roller 32-1 that is disposed at lower front position of the columnar body is greater than the load produced by the self-weight of the arm section 2 that is applied to the other rollers. Consequently, the possibility of the rollers 31-5 and 32-1 being damaged is higher than the possibility of the other rollers being damaged. Therefore, by applying rollers in which at least one of the surface hardness and strength is higher than in the other rollers to the rollers 31-5 and 32-1, the possibility of damaging the rollers can be reduced.

In the event of a roller being damaged, because the plurality of rollers are individually replaceable, it is sufficient to replace only the damaged roller, and hence the component replacement cost can be reduced in comparison to a case where the first and second connection pieces 23 and 24 are damaged. Thus, the robot arm mechanism according to the present embodiment improves the maintenance properties with respect to damage of the ejection section 30 onto which a load is applied from the entire arm section 2.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### REFERENCE SIGNS LIST

1... base, 2... arm section, 3... end effector, 4... wrist section, J1, J2, J4, J5, J6... rotary joint, J3... linear motion joint, 11a... first support body, 11b... second support body, 11c... third support body, 20... second connection piece string, 21... first connection piece string, 22... second connection piece, 23... first connection piece, 27... head piece, 30... ejection section, 31-1 to 31-5... upper roller, 32-1 to 32-5... lower roller, 33-1 to 33-3... left-side portion roller, 34-1 to 34-3... right-side portion roller, 35... frame.

## Claims

1. A robot arm mechanism **characterized in that** robot arm mechanism comprises:
an arm section capable of changing state between a rigid state and a bent state;
a supporting section that supports the arm section in the rigid state;
a housing section that houses the arm section in the bent state; and
a conveying section that sends the arm section out forward from the supporting section, draws back the arm section rearward to the supporting section, and conveys the arm section between the supporting section and the housing section;
wherein:
the supporting section includes a plurality of rollers for firmly sandwiching the arm section therebetween and supporting the arm section so as to be movable forward and rearward; and
at least one of a surface hardness and a strength of the plurality of rollers is identical to or lower than a surface hardness and/or a strength of the arm section.

2. The robot arm mechanism according to claim 1, **characterized in that**:
the arm section is made of metal, and the plurality of rollers are made of metal, made of resin or made of hard rubber.

3. The robot arm mechanism according to claim 2, **characterized in that**:
the arm section is made of a metal that is subjected to a surface treatment.

4. The robot arm mechanism according to claim 1, **characterized in that**:
the arm section is made of resin, and the plurality of rollers are made of resin or made of hard rubber.

5. The robot arm mechanism according to claim 1, **characterized in that**:
the plurality of rollers are made of self-lubricating resin, and the arm section is made of metal or made of resin.

6. The robot arm mechanism according to claim 5, **characterized in that**:
the arm section is made of self-lubricating resin.

7. The robot arm mechanism according to claim 1, **characterized in that**:
at least one of a surface hardness and a strength is identical among all of the plurality of rollers.

8. The robot arm mechanism according to claim 1, **characterized in that**:
multiple kinds of rollers among which at least one of a surface hardness and a strength are different are mixed in the plurality of rollers.

9. The robot arm mechanism according to claim 1, **characterized in that**:
a roller made of metal and a roller made of resin are mixed in the plurality of rollers.

10. The robot arm mechanism according to claim 1, **characterized in that**:
the plurality of rollers are dispersively disposed at front and rear, and on top and bottom with the arm section sandwiched therebetween; and
among the plurality of rollers, at least one of a surface hardness and a strength of a front upper roller and a rear lower roller is higher than a surface hardness and/or a strength of other rollers.

11. The robot arm mechanism according to claim 1, **characterized in that**:
the plurality of rollers are rotatably connected to a roller shaft through a bearing.

12. The robot arm mechanism according to claim 1, **characterized in that**:
each of the plurality of rollers is a cylinder made of self-lubricating resin, and is axially supported directly by a roller shaft.

13. The robot arm mechanism according to claim 12, **characterized in that**:
an inner wall of a shaft hole of the roller is subjected to grooving.

14. The robot arm mechanism according to claim 12, **characterized in that**:
a thread groove is formed in an inner wall of a shaft hole of the roller.

15. The robot arm mechanism according to claim 14, **characterized in that**:
in the inner wall of the shaft hole of the roller, thread grooves are formed in opposite directions to each other from both ends of the roller.

16. The robot arm mechanism according to claim 1, **characterized in that**:
the arm section comprises a plurality of first connection pieces having a plate shape that are bendably connected, a plurality of second connection pieces having an inverted C-shape or hollow square shape in transverse section that are bendably connected, and a columnar body for which bending is restricted and which is made rigid is constituted by joining together the first and second connection pieces, and the columnar body is broken up by separation of the first and second connection pieces, whereby the arm section is returned to a bent state.

17. The robot arm mechanism according to claim 1, **characterized in that**:
the arm section has a plurality of connection pieces that are bendably connected on a back surface side, and a columnar body in a rigid state is constituted by bending of the connection pieces being restricted.
